# EUROPEAN PATENT APPLICATION

(11) **EP 0 887 627 A1**
(43) Date of publication of application: **30.12.1998**
(21) Application number: 98660054.2
(22) Date of filing: 10.06.1998
(51) Int. Cl.: G01F 1/46, G01F 1/40

(54) **Method and measuring device for measuring the volume flow of gas flowing in the duct**

(30) Priority: 11.06.1997 FI 972467
(71) Applicant: Jyvaskylan Ivk-Tuote OY, 40250 Jyväskylä (FI)
(72) Inventor: Laine, Juhani, 00780 Helsinki (FI); Paananen, Tapio, 08500 Lohja (FI); Nyman, Mikko, 00330 Helsinki (FI); Oikari, Mika, 40740 Jyväskylä (FI)
(74) Representative: Helke, Kimmo Kalervo

(57) **Abstract**

The object of the invention is a method and measuring device for measuring precisely the volume flow of a gas in a duct (1), particularly in a disturbed flow. In the duct (1) is a two-chamber sensor (2) extending across the flow, on either side of which sensor, the flow inlet and outlet sides, are at least two connections (5), each extending to the chamber on its own side, which are connected by a feed-through penetrating the duct (1), to measure (6) the pressure to determine the pressure difference. Calibration data is used to determine the volume flow from the pressure difference thus obtained. The measuring sensor (2) is shaped asymmetrically in relation to the diameter running through the feed-through (3), while the measuring sensor (2) is turned through 180° after the first measurement, when a second measurement result is obtained and the average is calculated from the results obtained.

## Description

The present invention relates to a method and measuring device for measuring precisely the volume flow of a gas in a duct, particularly in a disturbed flow, in which method a two-chamber sensor extends across the flow, on either side of which sensor, the flow inlet and outlet sides, are at least two connections, each extending to the chamber on its own side, connected by a feed-through penetrating the duct, and measuring the pressure, to determine the pressure difference, with calibration data used to determine the volume flow from the pressure difference thus obtained.

Several kinds of sensors based on throttle-flange measurement are available for measuring volume flow. The principle of this old measurement method is to throttle the flow locally, creating a pressure difference over the flange, which is in a certain way proportional to the flow velocity and thus to the volume flow. One drawback of the conventional throttle flange is the throttle loss created, appearing as a small pressure drop that remains after the throttle flange. A large pressure drop is also often heard as noise. It is difficult to measure a disturbed flow, for example, immediately after a pipe bend or T-junction.

The flange, or throttle member, can comprise a strip set across the duct, with the pressure measured on either side of it. Advantageously, there are several pressure measurement points. Another known adaptation comprises a ring smaller than the duct, in which there are several measurement points on either side of the ring, in the direction of the flow. Each pressure measurement point is formed by a hole, which extends to the sensor's measurement duct, i.e. the chamber. From this there is a connection to another connection outside the duct. The inlet and outlet pressure measurement points are thus joined to their own connection points. The average pressure difference is thus obtained between the two connections. This kind of ring sensor is difficult to manufacture. Commercial flow measurement sensors are each calibrated for a certain size of pipe, when the volume flow corresponding to each pressure difference is read directly from the calibration curve.

Another problem with existing sensors is dirtying and the resulting reduction in measurement accuracy. Fixed sensors hinder the cleaning of the duct runs.

This invention is intended to create an improved method and a new type of measurement sensor employing the throttle flange principle, by means of which the volume flow of even a disturbed flow can be measured accurately, without large drops in pressure or other drawbacks. The characteristic features of the method and measurement sensor according to the invention appear in the accompanying Claims. An asymmetrical sensor permits different measurement results when the sensor is turned through 180°. On the other hand, the sensor may have a quite simple construction, comprising mainly two pieces of profile attached to each other. According to one advantageous adaptation of the invention, the measurement device is placed in a detachable cleaning hatch. It can then be turned by simply turning the symmetrical cleaning hatch. It can also be removed entirely along with the cleaning hatch, to simplify cleaning the duct. Other advantages and embodiments of the invention appear in connection with the following examples.

In what follows, the invention is illustrated with reference to the accompanying figures, which show one measurement sensor according to the invention, and its use.
- Figure 1: shows a measurement device according to the invention is a circular air-conditioning duct and a diagram of the measurement arrangement.
- Figure 2: shows the measurement device of Figure 1 seen from the side.
- Figure 3: shows the measurement device in an exploded view.
- Figure 4: shows the use of two measurement devices in a duct with a rectangular cross-section.

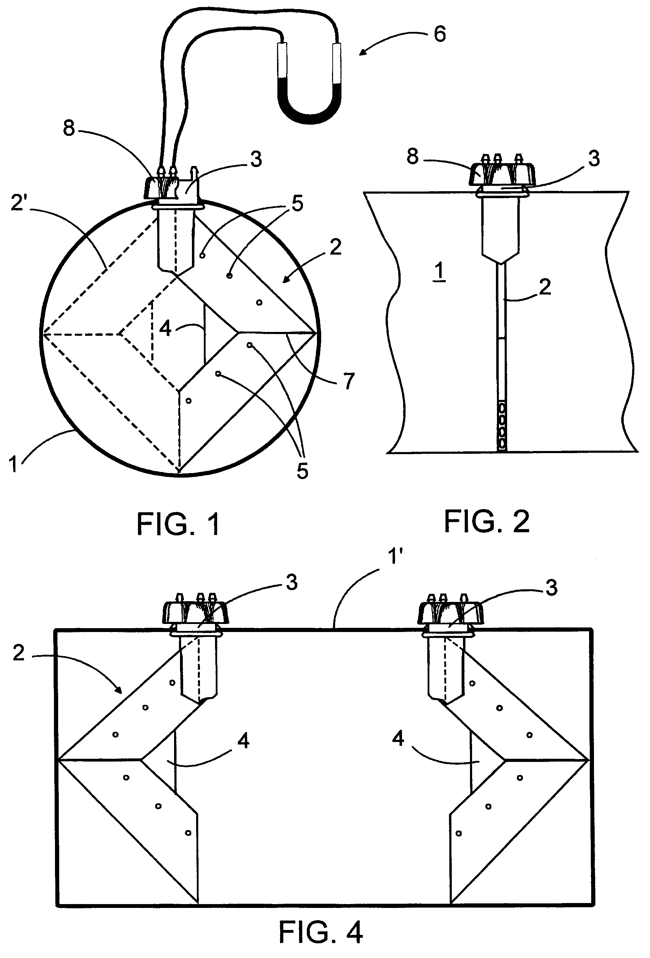

In Figure 1, the air-conditioning duct is marked with the reference number 1 and the measurement device installed in it with the reference number 2. In a known manner, the pressure connections 5 of the inlet and outlet sides of the measurement sensor are connected to a pressure difference measurement 6, which here is diagrammatically shown by a U-manometer. Measurement device 2 can be turned through 180° by turn-button 8, when a different measurement result will be obtained. Here, the position of the sensor is marked by reference number 2'. Each measurement device is calibrated in a known manner, when, in a practical measuring situation, the volume flow corresponding to the measured pressure difference can be read directly from the calibration curve.

Measurement device 2 includes a feed-through 3, which also forms a simple turning axle in the hole in duct 1. Another alternative for turning the sensor is to install it permanently in a rotatable cleaning hatch.

The sensor of the measurement device 2 is formed, according to Figures 1 and 2, of a plate-like angle piece, the corner 7 of which extended to the other edge asymmetrically in relation to the cross-sectional surface of the flow. Particularly in larger ducts, an additional flange 4 is used to increase the throttle-effect, whereas in smaller branches the length is reduced while maintaining the cross section. This creates a series according to the invention and corresponding to different pipe sizes.

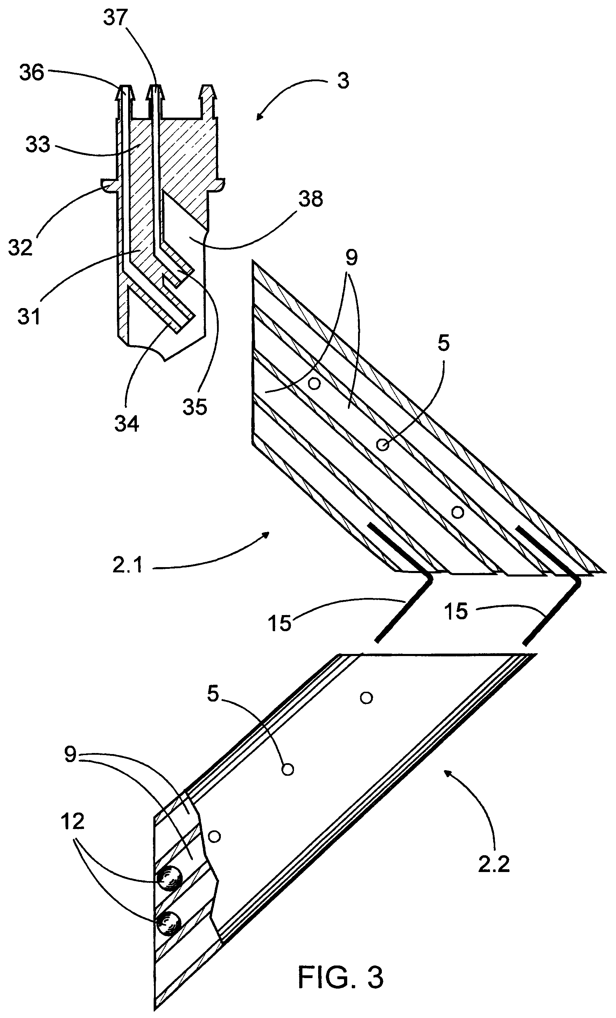

Figure 3 shows the principal components of the measurement device is a so-called exploded view. The measurement sensor includes a feed-through piece 3 and parts 2.1 and 2.2 form angle-piece branches. These are advantageously pieces cut from aluminium profile, in which the necessary machining is carried out. The aluminium profile comprises four internal channels, the two innermost being used as measurement channels, while the outermost are used to attach the branch components. Feed-through piece 3 comprises a plastic pin 31, in which a flange 32 is formed and an upper section 33 that forms a turning axle, which is pushed through a hole made in the wall of the duct. The wall of the duct remains between the flange 32 and the button 8 (Figures 1 and 2).

The first branch piece 2.1 is placed in groove 38, when its measurement channels 9 join with connections 34 and 35. No special seal is required, as the glue used for the attachment closes all the free gaps. The feed-through piece internal channels lead to the outlet connections 36 and 37, from which the pressure difference is measured.

The branch pieces 2.1 and 2.2 made from aluminium profile are cut according to Figure 3 at 45° at both ends. In branch piece 2.1 there is an additional cut fitting groove 38 of feed-through 3. Branch pieces 2.1 and 2.2 are joined by means of angle irons 15, the joint being suitably sealed, for example, with glue. The measurement channels 9 at the end of branch piece 2.2 are closed by plugs 12, which are formed simply by steel balls slightly larger than the channel.

The measurement sensor has been tested and its shape has been shown to be good. The thickness of the profile in the cross-section of the branches of the angle piece is 25 - 30% of its width. The branches (2.1, 2.2) of the angle piece have advantageously a rectangular cross-section, with rounded corners. The angle (7) between the branches (2.1, 2.2) of the angle piece is 90° ±20°, most advantageously 90° ±5°.

According to Figure 4, two measurement devices 2 with additional flanges 4 can be used in a rectangular duct 1', to achieve a precise result. If necessary, these can provide four measurement results to determine the average volume flow. When using a single measurement device, it is advantageous to attach it to one edge of a cleaning hatch (not shown), when the sensor can be brought to the other side of the cross-sectional surface of the flow by turning the hatch.

The measurement device can naturally be implemented in many ways differing from the above, and from different materials. In addition, one versed in the art knows many ways besides gluing and steel balls for sealing and closing.

## Claims

1. A method for measuring precisely the volume flow of a gas in a duct (1), particularly in a disturbed flow, in which method a two-chamber sensor extends across the flow, on either side of which sensor, the flow inlet and outlet sides, are at least two connections (5), each extending to the chamber on its own side, connected by a feed-through penetrating the duct (1), which measure the pressure (6) to determine the pressure difference, calibration data being used to determine the volume flow from the pressure difference thus obtained, characterized in that the measuring device (2) is asymmetrically arranged in relation to the diameter running through the feed-through (3) and the measuring device is turned through 180° after the first measurement, when a second measurement result is obtained and an average can be calculated from the results obtained.

2. A measuring device for measuring the volume flow in a duct (1), which measuring device includes a feed-through penetrating the duct (1), a sensor (2.1, 2.2) attached to it and essentially the size of the diameter, inside of which are at least two measurement channels (9), to which the inlet and outlet pressure connections (5) in the direction of flow in the surface of the sensor (2.1, 2.2) are connected, while from one of which measurement channels there is a connection through the feed-through to a pressure difference meter (6), characterized in that the sensor (2.1, 2.2) of the measuring device is shaped to form an angle piece with the angle (7) extending asymmetrically in the flow cross-sectional surface to the other edge, with the other end of the sensor (2.1, 2.2) being attached to the feed-through (3) and the opposite end extending essentially to the opposite side of the duct (1).

3. A measuring device according to Claim 2, characterized in that the feed-through (3) includes members (8, 32, 33) allowing the sensor (2) to be turned.

4. A measuring device according to Claims 2 or 3, characterized in that the branches of the angle piece of the sensor (2.1, 2.2) have a flat bar shape.

5. A measuring device according to Claim 4, characterized in that the thickness of the profile in the cross-section of the branches of the angle piece is 25 - 30% of its width.

6. A measuring device according to Claims 4 or 5, characterized in that the cross-section of the branches (2.1, 2.2) of the angle piece is a rectangle with rounded corners.

7. A measuring device according to one of Claims 4 - 6, characterized in that the angle (7) between the branches (2.1, 2.2) of the angle piece is 90° ±20°, most advantageously 90° ±5°.

8. A measuring device according to one of Claims 2 - 7, characterized in that the sensor is formed by aluminium profiles (2.1, 2.2) tightly attached to each other, inside of which are the aforesaid measurement channels (9) or chambers, to which holes from the surface of the sensor extend to form the aforesaid connections (5), and that one end of the angle piece thus formed is connected to the feed-through (3) and that there are plugs (12) in the measurement channels (9) of the profile (2.2) in the opposite end for closing them.

9. A measuring device according to Claim 8, characterized in that the feed-through (3) comprises a plastic pin (31), in which there is a groove (38) for the end of the profile (2.1) and connections (35) for the measurement channels (9).

10. A measuring device according to one of Claims 2 - 9, characterized in that the measuring device is installed in a detachable symmetrical cleaning hatch, which is arranged to be turned through 180°, when the sensor can be turned the other way or removed from the duct for cleaning.
